(19) **Europäisches Patentamt**
**European Patent Office**
**Office européen des brevets**

(11) **EP 3 900 955 B1**

(12) **EUROPEAN PATENT SPECIFICATION**

(45) Date of publication and mention
of the grant of the patent:
**10.04.2024 Bulletin 2024/15**

(21) Application number: **19897970.0**

(22) Date of filing: **14.12.2019**

(51) International Patent Classification (IPC):
***B60C 9/22*** *(2006.01)*        ***B60C 9/26*** *(2006.01)*

(52) Cooperative Patent Classification (CPC):
**B60C 9/263; B60C 9/22; B60C 9/2204; B60C 9/28;**
B60C 2009/0035; B60C 2009/2035;
B60C 2009/2077; B60C 2009/2083;
B60C 2009/2214; B60C 2009/2257;
B60C 2009/2266; B60C 2200/02

(86) International application number:
**PCT/JP2019/049072**

(87) International publication number:
**WO 2020/129870 (25.06.2020 Gazette 2020/26)**

(54) **AIRCRAFT PNEUMATIC TIRE**

FLUGZEUGLUFTREIFEN

BANDAGE PNEUMATIQUE POUR AVION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2018 JP 2018239332**

(43) Date of publication of application:
**27.10.2021 Bulletin 2021/43**

(73) Proprietor: **BRIDGESTONE CORPORATION
Chuo-ku
Tokyo 104-8340 (JP)**

(72) Inventors:
• **ICHIHARA, Eiji
Tokyo 104-8340 (JP)**

• **NAKAMURA, Yusuke
Tokyo 104-8340 (JP)**

(74) Representative: **Marks & Clerk LLP
15 Fetter Lane
London EC4A 1BW (GB)**

(56) References cited:
EP-A1- 2 394 822        JP-A- 2008 114 841
JP-A- 2009 143 332        JP-A- 2012 254 661
JP-A- 2017 047 891        JP-A- 2018 079 712
JP-A- 2018 144 744        US-A1- 2005 194 076

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to an aircraft pneumatic tire.

[Background Art]

A conventional aircraft pneumatic tire (for example, the aircraft radial tire described in Patent Document 1) includes a pair of bead cores and a radial carcass having one or more carcass plies extending toroidally between both the bead cores, and has belt layers as a tread reinforcement member on a radial directional outer side of a radial carcass of a tread section.
The belt layers include spirally wound belt layers in which a ribbon-shaped strip material with a belt cord including organic fibers and being covered with rubber is wound substantially in a circumferential direction; and zigzag belt layers in which a ribbon-shaped strip material with a belt cord including organic fibers and being covered with rubber is wound at an inclination with an angle relative to a tire equatorial plane and is wound while being folded back at both end portions of the belt layers in a width direction.
Since both ends of the zigzag belt layer in the width direction have the strip material shaped by being folded back zigzag, a part having only one layer is locally present, though it is desirable to ordinarily form a mixed layer of two strip material layers. Since a difference in rigidity is generated at the boundary of the two-layer part and the one-layer part, a large strain is generated in the one-layer part when the belt end portion is extended.
For securing durability of the belt cord, it is thus necessary to set the strain in the zigzag belt layers to be smaller than the strain in the spirally wound layers. As a method for such a purpose, setting the width of the spirally wound belt layer to be larger than the width of the zigzag belt layer is possible, and a technology such as that disclosed in Patent Document 1 has hitherto been studied.
The spirally wound belt layers are formed by winding the strip material while moving a drum laterally at the time of manufacture; thus, when the width of the strip material is enlarged, the area of the part where the number of the strip materials is not uniform at end portions of the spirally wound belt layers is enlarged. In addition, a large rigidity difference is generated at the winding start part of the strip material. For this reason, when the width of the strip material of the spirally wound belt layers is large, belt cord breakage becomes highly likely to be generated at the end parts in the width direction of the spirally wound belt layers, and, thus, it is desirable that the width of the strip material of the spirally wound belt layers be small.
On the other hand, when the width of the strip material of the zigzag belt layers is reduced, the area of the part that is among the folding-back parts at the ends and where the lap of the strip material becomes three or four layers is enlarged, leading to a trouble. Further, when it is intended to set the number of belt cords in the strip with a narrow strip width to be equal to the number of belt cords in the strip with a wide strip width, the gauge between the belt cords would be reduced, and a large strain is generated in the rubber between the belt cords, generating a trouble in this portion of the rubber. Thus, it is desirable that the width of the strip material of the zigzag belt layers be large.
In this way, conventionally, it has been difficult to secure both durability at end portions in the width direction of the zigzag belt layers and durability at the spirally wound belt ends.

[Prior Art Document]

[Patent Document]

Patent Document 1: JP 2009-143332 A - discloses a tire for a motocycle, provided with a pair of beads, a carcass, a band positioned on the outer side in the radial direction of the carcass and a reinforcement layer laminated on the band.
Patent Document 2: US 2005/0194076 A1 - relates to a pneumatic tire having a carcass and a crown region, the crown region comprising a crown reinforcement structure and a tread portion with a radially inner side and a tread on its radially outer side.
Patent Document 3: JP 2008-114841 A - discloses a pneumatic tire comprising a carcass and a belt reinforcing structure. The belt reinforcing structure comprises a composite belt structure of a cord reinforcing layer having at least two radial inward spiral layer and a radial outward zigzag belt reinforcing structure forming two cord layers.
Patent Document 4: JP 2012-254661 A - discloses an aircraft radial tire, with a tire shoulder that is shaped.
Patent Document 5: JP 2018-79712 A - relates to suppressing wear of a tread center part.
Patent Document 6: JP 2018-144744 A - discloses a pneumatic tire comprising at least one layer of belt arranged outside in a tire radial direction of a carcass, and a tread arranged outside in the tire radial direction of the belt.

Patent Document 7: JP 2017-47891 A - discloses a pneumatic tire with a carcass and a belt reinforcing structure.

Patent Document 8: EP 2394822 A1 - discloses a pneumatic tire having a carcass and a belt reinforcing structure.

[Summary of the Invention]

[Underlying Problem to be solved by the Invention]

It is an object of the present invention, in an aircraft pneumatic tire including belt layers including a spirally wound belt layer and zigzag belt layers, to secure both durability of the spirally wound belt layer and durability of the zigzag belt layers, and to realize enhancement of durability of the tire.

[Means to solve the Problem]

In order to achieve the above object, according to the present invention, there is provided an aircraft pneumatic tire including a pair of bead cores; a radial carcass including one or more carcass plies extending toroidally between both the bead cores; and belt layers that are disposed on an outer circumferential side of a crown region of the radial carcass and reinforce the radial carcass, in which the belt layers include a spirally wound belt layer that has one layer or a plurality of layers stacked and in which a ribbon-shaped first strip material with a first belt cord including organic fibers and being covered with rubber is spirally wound; and zigzag belt layers in which a ribbon-shaped second strip material with a second belt cord including organic fibers and being covered with rubber extends and is wound in a circumferential direction while bending zigzag by being folded back at width directional end edges to an outer circumferential side of the spirally wound belt layer and in which a plurality of layers are stacked, the maximum width Ws of the spirally wound belt layers is wider than the maximum width We of the zigzag belt layers, and the width Wse of the second strip material is wider than the width Wss of the first strip material.

While the present invention is configured as above, the maximum width Ws of the spirally wound belt layer is wider than the maximum width We of the zigzag belt layers, and the width Wse of the second strip material is wider than the width Wss of the first strip material, whereby, in the aircraft pneumatic tire including the belt layers including the spirally wound belt layer and the zigzag belt layers, both durability of the spirally wound belt layer and durability of the zigzag bet layers are secured, and durability of the tire is enhanced.

In the above configuration, the ratio of the width Wse of the second strip material to the width Wss of the first strip material may be in the range of $0.25 \leq Wss/Wse \leq 0.8$.

To set Wss/Wse to be equal to or less than 0.25, it is necessary to reduce the width Wss of the first strip material or to enlarge the width Wse of the second strip material. Even when the width Wss of the first strip material is reduced to be equal to or less than 0.25, an effect to increase the durability of the spirally wound belt layers at width directional ends is less, while the length of time for winding the spirally wound belt layer is elongated. In addition, when the width Wse of the second strip material is enlarged, the rigidity difference at the winding start part of the second strip material of the zigzag belt layers is enlarged, and durability of the winding start part deteriorates.

In view of this, by setting Wss/Wse to be equal to or more than 0.25, it is possible to enlarge the effect of durability at the width directional ends of the spirally wound belt layer and to shorten the length of time for winding the first strip material to form the spirally wound belt layer.

In addition, in the case where Wss/Wse is set to be equal to or more than 0.8, durability is hardly enhanced as compared to the case where Wss/Wse is set to 1.0, but labor is needed only to prepare the two kinds of strip materials of the first strip material and the second strip material.

Thus, by setting the ratio of the width Wse of the second strip material to the width Wss of the first strip material into the range of $0.25 \leq Wss/Wse \leq 0.8$, it is possible to shorten the length of time for winding the first strip material, to secure and enhance both durability of the spirally wound belt layer and durability of the zigzag belt layer, and to further enhance the durability of the tire.

In the above configuration, the first belt cord of the spirally wound belt layer may extend at an angle of equal to or less than 5° relative to the tire equatorial plane, and the second belt cord of the zigzag belt layers may extend at an inclination of an angle of 5° to 30° relative to the tire equatorial plane, to the folding-back points where the second belt cord is folded back at each width directional end edge of the zigzag belt layers.

According to the above configuration, by setting the angle of the first belt cord of the spirally wound belt layer to the tire equatorial plane to be equal to or less than 5°, the spirally wound belt layer can be wound in such a manner as not to generate gaps between the first strip materials.

Further, by setting the angle of the second belt cord of the zigzag belt layers to the tire equatorial plane to be equal to or more than 5°, it is possible to increase the rigidity in the direction of shear deformation in the plane of the belt layers, and to enhance cornering power of the tire.

In addition, by setting the angle of the second belt cord of the zigzag belt layers to the tire equatorial plane to be equal to or less than 30°, the rigidity in the tire circumferential direction of the belt layers can be increased, bulging at the time of filling with air pressure is reduced, and the durability of the tire can be enhanced.

In the above configuration, the spacing between the cord center of the first belt cord and the cord center of the adjacent first belt cord may be in the range of 1.1 to 2.0 times the diameter of the first belt cord, and the spacing between the cord center of the second belt cord and the cord center of the adjacent second belt cord may be in the range of 1.1 to 2.0 times the diameter of the second belt cord.

In the first belt cord and the second belt cord, when the spacing between the adjacent belt cords is reduced, the strain between the belt cords at the time of tire deformation is enlarged, and, when the belt cord spacing is enlarged, the number of the belt cords contained per one layer of the belt layer is reduced, so that it becomes difficult to secure a required tire strength.

By disposing the first belt cord and the second belt cord as described above, the belt cord spacing of the first belt cords and the belt cord spacing of the second belt cords can be made appropriate, the strain between the belt cords at the time of tire deformation is reduced, the number of the belt cords contained per one layer of the belt layer can be sufficient, a required tire strength can be secured, and durability of the tire can be further enhanced.

In the above configuration, the first strip material may have the first belt cords in the number in the range of two to six in the width direction, the second strip material may have the second belt cords in the number in the range of seven to eleven in the width direction, the number of the spirally wound belt layer may be in the range of one to five, and the number of the zigzag belt layers may be in the range of two to six.

In the case where the number of the spirally wound belt layer is large and the number of the zigzag belt layers is small, the in-plane shear rigidity of the belt layers is reduced, so that cornering power of the tire becomes insufficient. Conversely, in the case where the number of stacked layers of the zigzag belt layers is increased, the part where three or four layers are present is increased at the folding-back parts at the width directional ends of the zigzag belt layers. Therefore, the belt is thickened at belt end portions, and durability is deteriorated.

By setting the above configuration, the numbers of the spirally wound belt layers and the zigzag belt layers can be made appropriate, the in-plane shear rigidity of the belt layers can be increased, and sufficient cornering power of the tire can be obtained. In addition, the part where three or four layers are present at the folding-back parts at the width directional ends of the zigzag belt layers can be reduced, the thickness of the belt at belt end portions can be reduced, and durability of the tire can be enhanced.

[Effects of the Invention]

The aircraft pneumatic of the present invention is an aircraft pneumatic tire including the belt layers including the spirally wound belt layer and the zigzag belt layers, in which it is possible to secure both durability of the spirally wound belt layer and durability of the zigzag belt layers and to enhance durability of the tire.

[Brief Description of Drawings]

FIG. 1 is a width direction sectional view of an aircraft pneumatic tire of a first embodiment of the present invention in a state in which the aircraft pneumatic tire is assembled in a prescribed rim and loaded with air to a prescribed internal pressure.

FIG. 2 is a width direction sectional view in which major parts on one lateral side of the aircraft pneumatic tire of FIG. 1 are enlarged.

FIG. 3 is a partial development view depicting a formation example of a spirally wound belt layer.

FIG. 4 is a partial development view depicting a formation example of a zigzag belt layer.

Figure 5 is an enlarged vertical sectional view through the center of rotation of the main parts of the tire in the vicinity of the width directional end edge of the zigzag belt layer.

FIG. 6 is a width direction sectional view of a spiral winding strip material.

[Mode for carrying out the Invention]

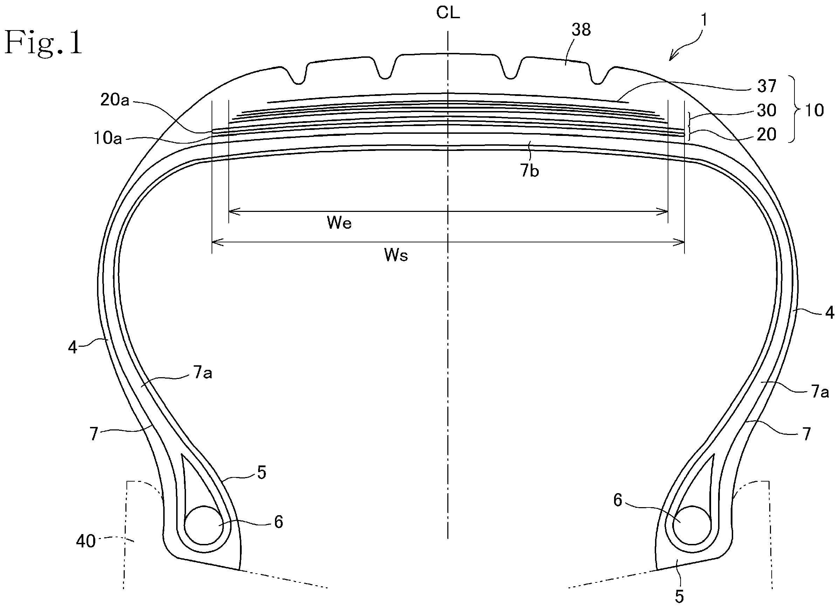

A first embodiment of an aircraft pneumatic tire 1 according to the present invention will be described based on FIGS. 1 to 6. FIG. 1 depicts a sectional view in a tire width direction of the aircraft pneumatic tire 1 (hereinafter referred to as the tire 1) of the first embodiment of the present invention. The tire 1 is assembled onto an applied rim 40.

In the figure, symbol CL corresponds to the tire width center, and indicates a tire equatorial plane which is a plane orthogonal to the tire rotational axis. The tire width direction is a direction parallel to the tire rotational axis, and the tire radial direction is a direction of approaching or spacing away from the tire rotational axis perpendicularly to the tire rotational axis.

The tire 1 includes bead sections 5 in which a pair of left and right ring-shaped bead cores 6 are embedded; a radial carcass 7 arranged to extend toroidally between the pair of bead cores 6; belt layers 10 in circumferential contact with the radial directional outer side of the radial carcass 7; a tread section having a tread rubber 38 in circumferential contact with an outer circumferential surface of the belt layers 10; and side wall sections 4 covering side portions of the tire 1.

The radial carcass 7 has one or more carcass plies 7a stacked, for example, four to seven carcass plies 7a are stacked, and both end portions thereof are fixed by being wound up to the radial directional inner side to the outer side in the periphery of the bead cores 6. In the tire 1 of the present embodiment, seven carcass plies 7a including nylon cords are stacked.

On the tire radial directionally outer side on the outer circumferential side of a crown region 7b of the radial carcass 7, the belt layers 10 reinforcing the radial carcass 7 are provided. The belt layers 10 include spirally wound belt layers 20 wound on the outer circumferential surface of the radial carcass 7, zigzag belt layers 30 stacked on the outer circumference of the spirally wound belt layers 20, and a protective belt layer 37 wound around the outer circumference of the zigzag belt layers. The tread rubber 38 is attached to the outer circumferential surface of the protective belt layer 37, to form the tread section 3. Both ends of the belt layers 10 in the width direction are defined as width directional end edges 10a.

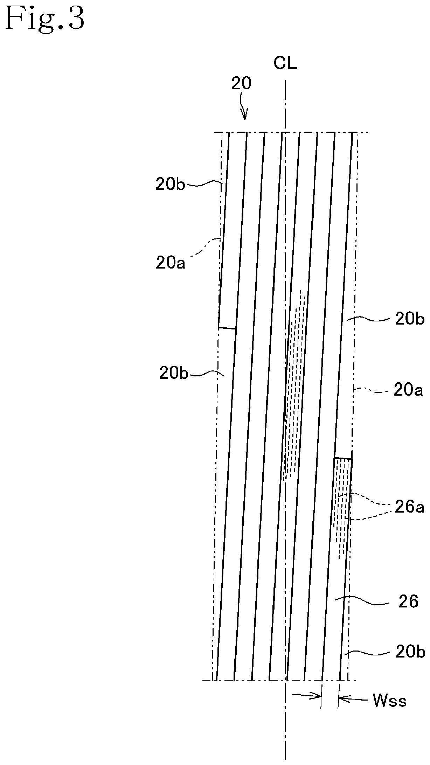

As depicted in FIGS. 3 to 5, the spirally wound belt layers 20 and the zigzag belt layers 30 are respectively made of a spiral winding strip 26 as a ribbon-shaped first strip material and a zigzag winding strip 36 as a ribbon-shaped second strip material, which are wound in a predetermined manner of winding respectively. The spiral winding strips 26, the zigzag winding strips 36, the organic fiber-made first belt cords 26a, and the organic fiber-made second belt cords 36a are aligned in plural numbers, and the assembly is covered with rubber, to be formed in a ribbon shape with a predetermined width.

As the organic fiber-made belt cords 26a and 36a used for the spiral winding strip 26 and the zigzag winding strip 36, organic fiber cords of an aromatic polyamide such as aramid are used. Alternatively, hybrid fiber cords produced by combining an aromatic polyamide and an aliphatic polyamide such as nylon may also be used.

The hybrid cord of the aliphatic polyamide fiber and the aromatic polyamide fiber may be a twined combination of yarn of an aliphatic polyamide fiber and yarn of an aromatic polyamide fiber or may be twined yarn obtained by twining preliminarily hybridized yarn of an aliphatic polyamide fiber and an aromatic polyamide fiber.

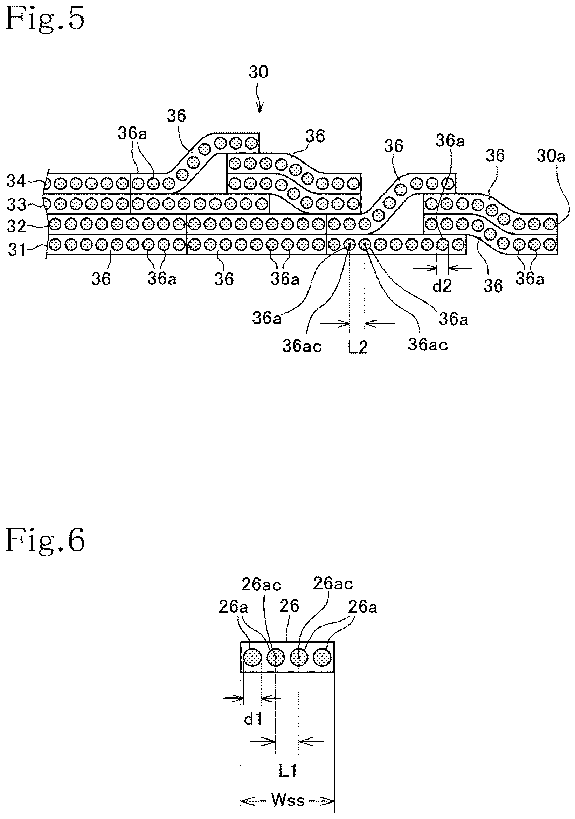

The number of the belt cords 26a of the spiral winding strips 26 is preferably in the range of two to six, and, in the present embodiment, the number is set to four as depicted in FIG. 6. The width Wss of the spiral winding strips 26 is preferably in the range of 3.0 to 9.0 mm, and, in the present embodiment it is set to 6.0 mm.

A spacing L1 between a cord center 26ac of the belt cord 26a and the cord center 26ac of the adjacent belt cord 26a in the spiral winding strip 26 is preferably in the range of 1.1 to 2.0 times the diameter d1 of the belt cord 26a.

As the belt cords 26a of the spiral winding strips 26, for example, hybrid cords including aramid and nylon or aramid cords composed only of aramid is used.

The number of the belt cords 36a of the zigzag winding strips 36 is preferably in the range of seven to eleven, and, in the present embodiment, the number is set to nine as depicted in FIG. 5. The width Wse of the zigzag winding strips 36 is preferably in the range of 6.0 to 18.0 mm, and, in the present embodiment, it is set to 12.0 mm.

The spacing L2 between a cord center 36ac of the belt cord 36a and the cord center 36ac of the adjacent belt cord 36a in the zigzag winding strip 36 is preferably in the range of 1.1 to 2.0 times the diameter d2 of the belt cord 36a.

As the belt cords 36a, for example, hybrid cords including aramid and nylon or aramid cords composed only of aramid are used.

As illustrated in FIGS. 1, 2, and 3, the spirally wound belt layers 20 of the tire 1 have a structure in which the spiral winding strips 26 as described above are spirally wound on the crown region 7b of the radial carcass 7 of a raw tire. The spirally wound belt layers 20 have the spiral winding strip 26 helically wound in the tire circumferential direction with a predetermined amount of deviation in the tire width circumferential direction such that gaps are not generated between the spiral winding strip 26 and the adjacent spiral winding strips 26.

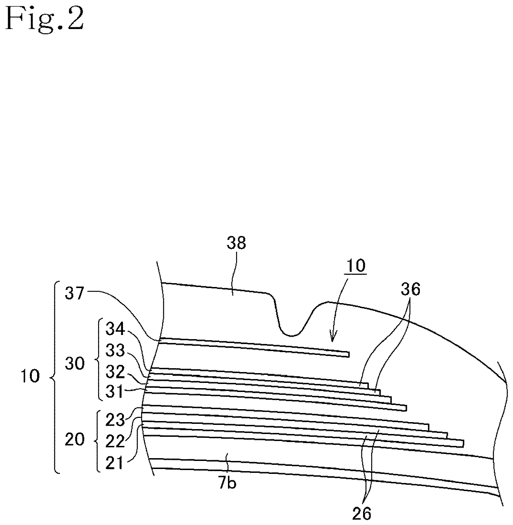

As depicted in FIGS. 2 and 3, the spiral winding strip 26 is folded back after being wound to the width directional end edge 20a of the spirally wound belt layer 20, a second layer 22 starts being wound on an outer circumferential surface of a first layer 21, is wound around toward the other width directional end edge 20a, and is sequentially folded back and stacked, and, thus, the first layer 21 and a third layer 23 of the spirally wound belt layers 20 are stacked.

The spiral winding strip 26 is wound with the angle of its belt cord 26a set to a predetermined angle relative to the tire equatorial plane CL. In the present embodiment, the spiral winding strip 26 is wound such that the belt cord 26a is at an angle of equal to or less than 5° relative to the tire equatorial plane CL. When the spiral winding strip 26 starts being wound on the crown region 7b of the radial carcass 7, the winding is started from a position of the width directional end edge 10a in the tire width direction of the belt layers 10.

The number of the spirally wound belt layers 20 is preferably in the range of one to five, and, in the present embodiment, the spirally wound belt layers 20 are composed of three layers of the first layer 21, the second layer 22, and the third layer 23 from the inside in the tire radial direction.

In the spirally wound belt layers 20, the spiral winding strip 26 is wound such as to have a predetermined angle relative to the tire equatorial plane CL and such as not to generate gaps between the spiral winding strip 26 and the adjacent spiral winding strips 26. Thus, in the vicinity of the width directional end edges 20a of the spirally wound belt layer 20, non-stacked regions 20b where the spiral winding strip 26 is not wound is generated, as depicted in FIG. 3. As the width Wss of the spiral winding strip 26 is larger, the area of the non-stacked regions 20b becomes larger, resulting in a lowering in the strength at end portions of the spirally wound belt layer 20 in the width direction. In view of this, the width Wss of the spiral winding strip 26 is narrowed, whereby the strength at width directional end edges 20a of the spirally wound belt layer 20 is enhanced.

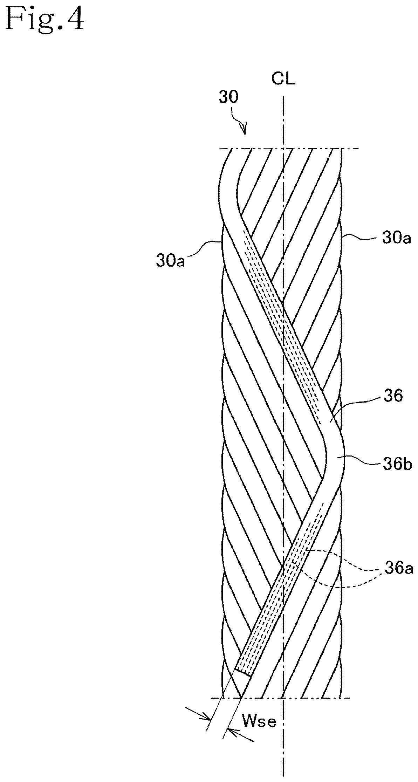

The zigzag belt layers 30 are configured by winding the zigzag winding strip 36 by a predetermined method, as depicted in FIGS. 4 and 5, on an outer circumferential side of the spirally wound belt layers 20. As illustrated in FIG. 1, the zigzag winding strip 36 is wound on the spirally wound belt layers 20 such that the maximum width We of the zigzag belt layers 30 is narrower than the maximum width Ws of the spirally wound belt layers 20.

The zigzag belt layers 30 have a structure in which the zigzag winding strip 36 is folded back at width directional end edges 30a of the predetermined zigzag belt layers 30 and extends and is wound in the circumferential direction while bending zigzag. The zigzag winding strip 36 is wound with a desired amount of deviation in the circumferential direction so as not to generate gaps between the zigzag winding strip 36 and the adjacent zigzag winding strips 36.

The zigzag winding strip 36 is wound such that the belt cord 36a of the zigzag winding strip 36 extends at an inclination of an angle of 5° to 30° relative to the tire equatorial plane CL, to folding-back points 36b folded back at both width directional end edges 30a of the zigzag belt layers 30.

The zigzag belt layers 30 are a plurality of layers stacked in a prescribed number, the number being preferably in the range of two to six and being four in the present embodiment.

In the vicinity of the width directional end edges 30a of the zigzag belt layers 30, the zigzag winding strip 36 is folded and is stacked in plural numbers. Thus, if the width of the zigzag winding strip 36 is narrow, the area of that part of the folding-back parts where three or four layers are stacked is enlarged, possibly leading to a trouble at the width directional end edges 10a of the belt layers 10. In view of this, the width of the zigzag winding strip 36 is set large, whereby the strength of the zigzag belt layers 30 is enhanced.

As described above, as the width Wss of the spiral winding strip 26 is narrower, the strength of the spirally wound belt layers 20 can be enhanced, while as the width Wse of the zigzag winding strip 36 is wider, the strength of the zigzag belt layers 30 can be enhanced. In view of this, the width Wse of the zigzag winding strip 36 is set larger than the width Wss of the spiral winding strip 26, and the ratio between the width Wse of the zigzag winding strip 36 and the width Wss of the spiral winding strip 26 is preferably in the range of

$$0.25 \leq Wss/Wse \leq 0.8$$

whereby the strength of the belt layers 10 as a whole can be more enhanced.

After the raw tire is produced such as to obtain a state in which the spirally wound belt layers 20, the zigzag belt layers 30, and the protective belt layer 37 are wound on the circumferential direction outer side of the crown region 7b of the radial carcass 7 and the tread rubber 38 is wound on the outer circumferential surface thereof, the raw tire is subjected to vulcanization molding, whereby the tire 1 of the present embodiment is obtained.

Since the tire 1 of the present embodiment is configured as described above, by narrowing the width Wss of the spiral winding strip 26 to thereby reduce the area of the non-stacked regions 20b in the vicinity of the width directional end edges 20a of the spirally wound belt layers 20, the strength at the width directional end edges 20a of the spirally wound belt layers 20 can be enhanced. In addition, by widening the width Wse of the zigzag winding strip 36 to thereby reduce the area of the part where three or four or more zigzag winding strips 36 are stacked at the width directional end edges 30a of the zigzag belt layers 30, the strength in the vicinity of the width directional end edges 30a of the zigzag belt layers 30 can be enhanced. Thus, the strength of the tire 1 as a whole can be enhanced.

Examples

Each of the tires having the abovementioned configuration and a size of 52 × 22.OR22, of Prior Art Examples 1 and 2 and Examples 1 to 6 of which the specifications are set forth in Table 1 and those of Prior Art Examples 3 and 4 and Examples 7 to 12 of which the specifications are set forth in Table 2, belt cord strength after drum traveling is obtained, and the results are represented in terms of indices.

The tires set forth in Tables 1 and 2 all include the radial carcass 7 having seven carcass plies 7a including nylon cords being stacked; and the belt layers 10 including the spirally wound belt layers 20 and the zigzag belt layers 30. In the tires set forth in Table 1, aramid is used as the belt cord material for the spiral winding strip 26 and the zigzag winding strip 36. In the tires set forth in Table 2, hybrid cords including aramid and nylon are used as the belt cord material for the spiral winding strip 26 and the zigzag winding strip 36.

[Table 1]

| | | Prior Art Example 1 | Prior Art Example 2 | Example 1 | Example 2 | Example 3 | Example 4 | Example 5 | Example 6 |
|---|---|---|---|---|---|---|---|---|---|
| Strip material width of spirally wound belt layer | | 6.0 | 12.0 | 6.0 | 6.0 | 6.0 | 6.0 | 4.5 | 3.0 |
| Strip material width of zigzag belt layer | | 6.0 | 12.0 | 12.0 | 10.5 | 9.0 | 7.5 | 12.0 | 12.0 |
| Wss/Wse | | 1.00 | 1.00 | 0.50 | 0.57 | 0.67 | 0.80 | 0.38 | 0.25 |
| Belt cord material | | Aramid | Aramid | Aramid | Aramid | Aramid | Aramid | Aramid | Aramid |
| Belt cord strength after drum traveling | Spirally wound belt layer | 97 | 80 | 97 | 97 | 97 | 97 | 99 | 100 |
| | Zigzag belt layer | 80 | 98 | 98 | 96 | 94 | 91 | 98 | 98 |

[Table 2]

| | | Prior Art Example 3 | Prior Art Example 4 | Example 7 | Example 8 | Example 9 | Example 10 | Example 11 | Example 12 |
|---|---|---|---|---|---|---|---|---|---|
| Strip material width of spirally wound belt layer | | 6.0 | 12.0 | 6.0 | 6.0 | 6.0 | 6.0 | 4.5 | 3.0 |
| Strip material width of zigzag belt layer | | 6.0 | 12.0 | 12.0 | 10.5 | 9.0 | 7.5 | 12.0 | 12.0 |
| Wss/Wse | | 1.00 | 1.00 | 0.50 | 0.57 | 0.67 | 0.80 | 0.38 | 0.25 |
| Belt cord material | | Hybrid | Hybrid | Hybrid | Hybrid | Hybrid | Hybrid | Hybrid | Hybrid |
| Belt cord strength after drum traveling | Spirally wound belt layer | 98 | 86 | 98 | 98 | 98 | 98 | 99 | 100 |
| | Zigzag belt layer | 86 | 99 | 99 | 97 | 96 | 94 | 99 | 99 |

The belt cord strength after drum traveling is measured as follows. Each tire is attached to a prescribed rim, is filled with air to a prescribed pressure, and is subjected to a drum test. After drum traveling for a predetermined distance under a load and a speed in simulation of a market, the tire 1 is dissected, the belt cords 26a and 36a on the outermost side in the width direction of the spirally wound belt layers 20 and the zigzag belt layers 30 are taken out and are subjected to measurement of strength, and the strength is evaluated. The test results are represented in terms of index with the strength of the cord taken out from a new tire set as 100, and are compared. A higher index indicates small fatigue of the belt cord and good fatigue resistance performance, and indicates that the tire is higher in durability.

In Examples 1 to 12 of the present invention, since the tire is configured as described above, durability of the spirally wound belt layers 20 and durability of the zigzag belt layers 30 are both secured, and durability of the tire 1 can be enhanced.

[Reference Signs List]

| | |
|---|---|
| 1: | Aircraft pneumatic tire |
| 3: | Tread section |
| 4: | Side wall section |
| 5: | Bead section |
| 6: | Bead core |
| 7: | Radial carcass |
| 7a: | Carcass ply |
| 7b: | Crown region |
| 10: | Belt layer |
| 10a: | Width directional end edge |
| 20: | Spirally wound belt layer |
| 21: | First layer |
| 22: | Second layer |
| 23: | Third layer |
| 26: | Spiral winding strip |
| 26a: | Belt cord |
| 26ac: | Cord center |
| 30: | Zigzag belt layer |
| 31: | First layer |
| 32: | Second layer |
| 33: | Third layer |
| 34: | Fourth layer |
| 36: | Zigzag winding strip |
| 36a: | Belt cord |
| 36ac: | Cord center |
| 36: | Folding-back point |
| 37: | Protective belt layer |
| 38: | Tread rubber |
| 40: | Applied rim |
| CL: | Tire equatorial plane |
| Ws: | Maximum width of spirally wound belt layer. |
| We: | Maximum width of zigzag belt layer |
| Wss: | Width of spiral winding belt strip |
| Wse: | Width of zigzag belt strip |
| d1: | Diameter |
| d2: | Diameter |
| L1: | Spacing |
| L2: | Spacing. |

**Claims**

**1.** An aircraft pneumatic tire comprising:

a pair of bead cores (6);

a radial carcass (7) including one or more carcass plies (7a) extending toroidally between both the bead cores (6); and

belt layers (10) that are disposed on an outer circumferential side of a crown region of the radial carcass (7) and reinforce the radial carcass (7), wherein

the belt layers (10) include

a spirally wound belt layer (20) that has one layer or a plurality of layers (21, 22, 23) stacked and in which a ribbon-shaped first strip material (26) with a first belt cord (26a) including organic fibers and being covered with rubber is spirally wound, and

zigzag belt layers (30) in which a ribbon-shaped second strip material (36) with a second belt cord (36a) including organic fibers and being covered with rubber extends and is wound in a circumferential direction while bending zigzag by being folded back at width directional end edges (30a) to an outer circumferential side of the spirally wound belt layer (20) and in which a plurality of layers (31, 32, 33, 34) are stacked,

a maximum width Ws of the spirally wound belt layer (20) is wider than a maximum width We of the zigzag belt layers (30), **characterized in that**

a width Wse of the second strip material (36) is wider than a width Wss of the first strip material (26).

2. The aircraft pneumatic tire according to claim 1, wherein a ratio of the width Wse of the second strip material to the width Wss of the first strip material is in a range of $0.25 \leq Wss/Wse \leq 0.8$.

3. The aircraft pneumatic tire according to claim 1 or 2,

wherein the first belt cord (26a) of the spirally wound belt layer (20) extends at an angle of equal to or less than 5° relative to a tire equatorial plane (CL), and

the second belt cord (36a) of the zigzag belt layers (30) extends at an inclination of an angle of 5° to 30° relative to the tire equatorial plane (CL), to folding-back points (36b) where the second belt cord (36a) is folded back at each width directional end edge (30a) of the zigzag belt layers (30).

4. The aircraft pneumatic tire according to any one of claims 1 to 3,

wherein a spacing (L1) between a cord center (26ac) of the first belt cord (26a) and the cord center (26ac) of the adjacent first belt cord (26a) is 1.1 to 2.0 times the diameter (d1) of the first belt cord (26a), and

a spacing (L2) between a cord center (36ac) of the second belt cord (36a) and the cord center (36ac) of the adjacent second belt cord (36a) is 1.1 to 2.0 times the diameter (d2) of the second belt cord (36a).

5. The aircraft pneumatic tire according to any one of claims 1 to 4,

wherein the first strip material (26) has two to six first belt cords (26a) in a width direction,

the second strip material (36) has seven to eleven second belt cords (36a) in the width direction,

the number of the spirally wound belt layer (20) is in the range of one to five, and

the number of the zigzag belt layers (30) is in the range of two to six.

**Patentansprüche**

1. Luftfahrzeug-Luftreifen, der Folgendes umfasst:

ein Paar von Wulstkernen (6),

eine radiale Karkasse (7), die eine oder mehrere Karkassenschichten (7a) einschließt, die sich kreisringförmig zwischen den beiden Wulstkernen (6) erstrecken, und

Gürtellagen (10), die auf einer äußeren Umfangsseite eines Scheitelbereichs der radialen Karkasse (7) angeordnet sind und die radiale Karkasse (7) verstärken, wobei

die Gürtellagen (10) Folgendes einschließen:

eine spiralig gewundene Gürtellage (20), die eine Lage oder eine Vielzahl von Lagen (21, 22, 23) gestapelt aufweist und in der ein bandförmiges erstes Streifenmaterial (26) mit einem ersten Gürtelkord (26a), der organische Fasern einschließt und mit Gummi überzogen ist, spiralig gewunden ist, und Zickzack-Gürtellagen (30), in denen sich ein bandförmiges zweites Streifenmaterial (36) mit einem zweiten Gürtelkord (36a), der organische Fasern einschließt und mit Gummi überzogen ist, erstreckt und in einer Umfangsrichtung gewunden ist, während es sich im Zickzack biegt dadurch, dass es an Breitenrichtungsendkanten (30a) zu einer äußeren Umfangsseite der spiralig gewundenen Gürtellage (20) umgeklappt ist, und in denen eine Vielzahl von Lagen (31, 32, 33, 34) gestapelt sind, eine maximale Breite Ws der spiralig gewundenen Gürtellage (20) breiter ist als eine maximale Breite We der Zickzack-Gürtellagen (30), **dadurch gekennzeichnet, dass** eine Breite Wse des zweiten Streifenmaterials (36) breiter ist als eine Breite Wss des ersten Streifenmaterials (26).

2.  Luftfahrzeug-Luftreifen nach Anspruch 1, wobei ein Verhältnis der Breite Wse des zweiten Streifenmaterials zu der Breite Wss des ersten Streifenmaterials in einem Bereich von $0,25 \leq Wss/Wse \leq 0,8$ liegt.

3.  Luftfahrzeug-Luftreifen nach Anspruch 1 oder 2,

    wobei sich der erste Gürtelkord (26a) der spiralig gewundenen Gürtellage (20) in einem Winkel von gleich oder weniger als 5° im Verhältnis zu einer Reifenäquatorialebene (CL) erstreckt und sich der zweite Gürtelkord (36a) der Zickzack-Gürtellagen (30) mit einer Neigung von einem Winkel von 5° bis 30° im Verhältnis zu der Reifenäquatorialebene (CL) erstreckt, bis zu Umklapppunkten (36b), wo der zweite Gürtelkord (36a) an jeder Breitenrichtungsendkante (30a) der Zickzack-Gürtellagen (30) umgeklappt ist.

4.  Luftfahrzeug-Luftreifen nach einem der Ansprüche 1 bis 3,

    wobei ein Abstand (L1) zwischen einer Kordmitte (26ac) des ersten Gürtelkords (26a) und der Kordmitte (26ac) des benachbarten ersten Gürtelkords (26a) das 1,1- bis 2,0-Fache des Durchmessers (d1) des ersten Gürtelkords (26a) beträgt und ein Abstand (L2) zwischen einer Kordmitte (36ac) des zweiten Gürtelkords (36a) und der Kordmitte (36ac) des benachbarten zweiten Gürtelkords (36a) das 1,1- bis 2,0-Fache des Durchmessers (d2) des zweiten Gürtelkords (36a) beträgt.

5.  Luftfahrzeug-Luftreifen nach einem der Ansprüche 1 bis 4,

    wobei das erste Streifenmaterial (26) zwei bis sechs erste Gürtelkords (26a) in einer Breitenrichtung aufweist, das zweite Streifenmaterial (36) sieben bis elf zweite Gürtelkords (36a) in der Breitenrichtung aufweist, die Anzahl der spiralig gewundenen Gürtellage (20) in dem Bereich von eins bis fünf liegt und die Anzahl der Zickzack-Gürtellagen (30) in dem Bereich von zwei bis sechs liegt.

**Revendications**

1.  Bandage pneumatique pour aéronef comprenant :

    une paire de tringles (6),
    une carcasse radiale (7) incluant un ou plusieurs plis de carcasse (7a) s'étendant de manière toroïdale entre les deux tringles (6), et
    des couches de ceinture (10) disposées sur un côté circonférentiel extérieur d'une région de sommet de la carcasse radiale (7) et renforçant ladite carcasse radiale (7), dans lequel les couches de ceinture (10) incluent
    une couche de ceinture enroulée en spirale (20) qui comporte une couche ou une pluralité de couches (21, 22, 23) empilées et dans laquelle un premier matériau en bande (26) en forme de ruban, doté d'un premier cordon de ceinture (26a) incluant des fibres organiques et recouvert de caoutchouc, est enroulé en spirale, et des couches de ceinture en zigzag (30) dans lesquelles s'étend un deuxième matériau en bande (36) en forme de ruban, avec un deuxième cordon de ceinture (36a) incluant des fibres organiques et recouvert de caoutchouc, qui est enroulé dans une direction circonférentielle tout en se pliant en zigzag en étant replié sur les bords d'extrémité de la largeur (30a) vers un côté circonférentiel extérieur de la couche de ceinture enroulée en spirale (20), et dans lesquelles sont empilées une pluralité de couches (31, 32, 33, 34) ; une largeur maximale Ws de la couche de ceinture enroulée en spirale (20) est supérieure à une largeur maximale We des couches de ceinture en zigzag (30) ; **caractérisé en ce que**
une largeur Wse du deuxième matériau en bande (36) est supérieure à une largeur Wss du premier matériau en bande (26).

2. Bandage pneumatique pour aéronef selon la revendication 1, dans lequel un rapport de la largeur Wse du deuxième matériau en bande à la largeur Wss du premier matériau en bande est compris dans une plage de 0,25 ≤ Wss/Wse ≤ 0,8.

3. Bandage pneumatique pour aéronef selon la revendication 1 ou 2, dans lequel

le premier cordon de ceinture (26a) de la couche de ceinture enroulée en spirale (20) s'étend selon un angle égal ou inférieur à 5° par rapport à un plan équatorial de bandage (CL), et
le deuxième cordon de ceinture (36a) des couches de ceinture en zigzag (30) s'étend selon une inclinaison d'un angle de 5° à 30° par rapport au plan équatorial de bandage (CL), jusqu'à des points de repli (36b) où la deuxième ceinture de cordon (36a) est repliée au niveau de chaque bord d'extrémité de la largeur (30a) des couches de ceinture en zigzag (30).

4. Bandage pneumatique pour aéronef selon l'une quelconque des revendications 1 à 3, dans lequel

un écart (L1) entre un centre de cordon (26ac) du premier cordon de ceinture (26a) et le centre de cordon (26ac) du premier cordon de ceinture (26a) adjacent fait de 1,1 à 2,0 fois le diamètre (d1) du premier cordon de ceinture (26a), et
un écart (L2) entre un centre de cordon (36ac) du deuxième cordon de ceinture (36a) et le centre de cordon (36ac) du deuxième cordon de ceinture (36a) adjacent fait de 1,1 à 2,0 fois le diamètre (d2) du deuxième cordon de ceinture (36a).

5. Bandage pneumatique pour aéronef selon l'une quelconque des revendications 1 à 4, dans lequel

le premier matériau en bande (26) comporte deux à six premiers cordons de ceinture (26a) dans le sens de la largeur,
le deuxième matériau en bande (36) comporte sept à onze deuxièmes cordons de ceinture (36a) dans le sens de la largeur,
le nombre de couches de ceinture enroulées en spirale (20) est compris dans la plage de un à cinq, et
le nombre de couches de ceinture en zigzag (30) est compris dans la plage de deux à six.

Fig.1

EP 3 900 955 B1

Fig.2

Fig.3

Fig.4

Fig.5

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009143332 A
- US 20050194076 A1
- JP 2008114841 A
- JP 2012254661 A

- JP 2018079712 A
- JP 2018144744 A
- JP 2017047891 A
- EP 2394822 A1